# EUROPEAN PATENT APPLICATION

(11) **EP 4 764 787 A1**
(43) Date of publication of application: **24.06.2026**
(21) Application number: 25220166.0
(22) Date of filing: 02.12.2025
(51) Int. Cl.: G06F 1/30, H02H 7/26, H04L 12/10

(54) **POWER SUPPLY AND MONITORING IN A RING NETWORK**

(30) Priority: 19.12.2024 US 202418987325
(71) Applicant: Honeywell International Inc., Charlotte, NC 28202 (US)
(72) Inventor: XIE, Jiongyi, Charlotte, 28202 (US); LI, Tang, Charlotte, 28202 (US); ZHANG, Juntao, Charlotte, 28202 (US); HUANG, Yongsheng, Charlotte, 28202 (US)
(74) Representative: Haseltine Lake Kempner LLP

(57) **Abstract**

Power supply and monitoring in a ring network is described herein. An example apparatus includes a first power supply input/output (I/O) port, a second power supply I/O port, and a power control circuit configured to delay power from being supplied to the apparatus via the first power supply I/O port and the second power supply I/O port, and, upon a short circuit occurring on one of the first power supply I/O port and the second power supply I/O port during the delay, isolate the one of the first power supply I/O port and the second power supply I/O port on which the short circuit is occurring after the delay and supply power to the apparatus via the other one of the first power supply I/O port and the second power supply I/O port on which the short circuit is not occurring after the delay.

## Description

### Technical Field

The present disclosure relates generally to power supply and monitoring in a ring network.

### Background

Large facilities (e.g., buildings), such as commercial facilities, office buildings, hospitals, and the like, may have a public address/voice alarm system that can be used during an emergency event (e.g., a fire) to provide guidance to occupants of the facility, such as, for instance, a warning for the occupants to evacuate and/or directions for the occupants to follow. For example, a public address/voice alarm system can include a number of call stations that can communicate with a number of speakers located throughout the facility. A user (e.g., controller or operator) can input (e.g., speak) instructions and/or commands for the occupants of the facility into the call stations, which can communicate (e.g., transmit) the instructions and/or commands to the speakers, which in turn can provide (e.g. broadcast) the instructions and/or commands to the occupants of the facility during the emergency event.

### Brief Description of the Drawings

Figure 1 illustrates an example of an apparatus for power supply and monitoring in a ring network in accordance with an embodiment of the present disclosure.
Figures 2A-2C illustrate examples of an apparatus for power supply and monitoring in a ring network in accordance with an embodiment of the present disclosure.
Figure 3 illustrates an example of a system in accordance with an embodiment of the present disclosure.
Figure 4 illustrates an example of a call station for a voice alarm system in accordance with an embodiment of the present disclosure.

### Detailed Description

Power supply and monitoring in a ring network is described herein. An example apparatus includes a first power supply input/output (I/O) port, a second power supply I/O port, and a power control circuit configured to delay power from being supplied to the apparatus via the first power supply I/O port and the second power supply I/O port, and, upon a short circuit occurring on one of the first power supply I/O port and the second power supply I/O port during the delay, isolate the one of the first power supply I/O port and the second power supply I/O port on which the short circuit is occurring after the delay and supply power to the apparatus via the other one of the first power supply I/O port and the second power supply I/O port on which the short circuit is not occurring after the delay.

Call stations of a voice alarm system (e.g., a public address/voice alarm system) need a redundant power supply to ensure safe and continuous operation. However, in some use environments, the call stations may not have access to an AC power supply. In such instances, the power supply for the call stations can be provided via the network ports of the call stations.

Existing voice alarm systems can use power over ethernet (POE) and/or single-pair POE to supply power to the call stations. However, to provide redundancy both network ports of the call stations would need to be connected to the POE power supply, which can be costly. Further, in some instances, the call stations of the voice alarm system may be connected in a daisy chain configuration (e.g., a configuration in which the call stations are wired together in sequence or in a ring), and in such a configuration POE is unable to provide a redundant power supply because POE can only provide point-to-point power.

Call stations in accordance with the present disclosure, however, can have (e.g., be provided with) a redundant power supply in a low cost manner, even when connected in a daisy chain ring configuration. For instance, call stations in accordance with the present disclosure can compensate for a short (e.g., open) circuit occurring on the line connection.

For example, call stations in accordance with the present disclosure can include a power control circuit to delay power from being supplied to the call station in order to provide time to determine whether a short circuit is occurring. If a short circuit is occurring, the power control circuit can isolate the short circuit (e.g., the line on which the short circuit is occurring) so that the power supply to the call station is not affected. The power control circuit can be a pure hardware circuit that can operate without software control or other external intervention (e.g., from the controller of the power control circuit), and as such can be implemented in a simple, low cost manner and operate with a fast response time.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

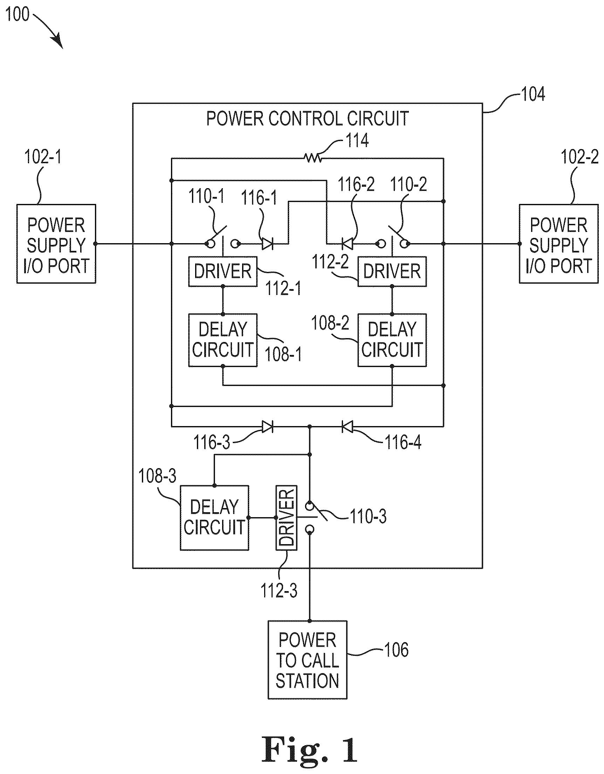

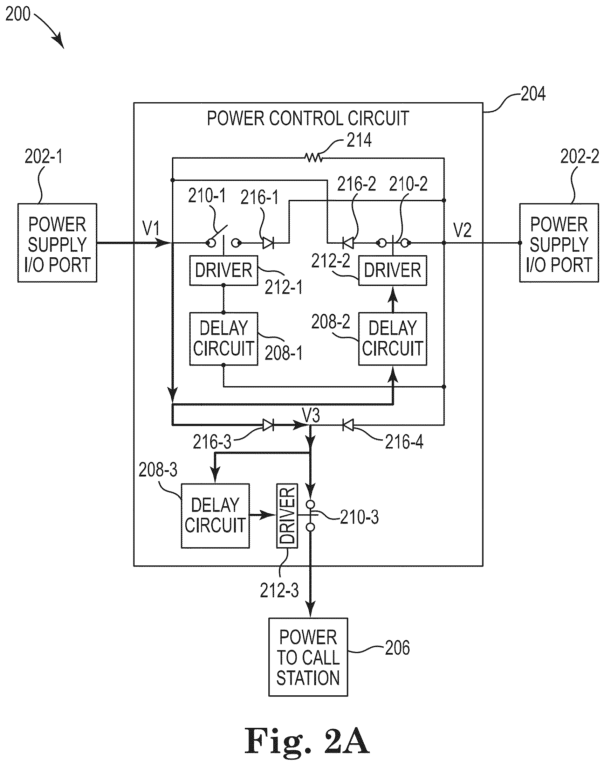

The figures herein follow a numbering convention in which the first digit or digits correspond to the drawing figure number and the remaining digits identify an element or component in the drawing. Similar elements or components between different figures may be identified by the use of similar digits. For example, 104 may reference element "04" in Figure 1, and a similar element may be referenced as 204 in Figures 2A-2C.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 illustrates an example of an apparatus 100 for power supply and monitoring in a ring network in accordance with an embodiment of the present disclosure. Apparatus 100 can be, for example, a call station for a voice alarm system. However, embodiments of the present disclosure are not limited to this example.

As an example, apparatus (e.g., call station) 100 can be, for example, a call station for a public address/voice alarm system of a facility (e.g., building), and can be used during an emergency event (e.g., a fire) to provide guidance to occupants of the facility, such as, for instance, a warning for the occupants to evacuate and/or directions for the occupants to follow. For example, a user (e.g., controller, operator, or emergency personnel) can input (e.g., speak) instructions and/or commands for the occupants of the facility into call station 100, and call station 100 can communicate (e.g., transmit) the instructions and/or commands to speakers or other sound emitting devices of the voice alarm system located throughout the facility (e.g., in different rooms and on different floors of the facility), which in turn can provide (e.g. broadcast) the instructions and/or commands to the occupants of the facility during the emergency event.

The facility can be, for instance, a large facility having a large number of floors, such as a commercial facility, office building, hospital, and the like. However, embodiments of the present disclosure are not limited to a particular type of facility.

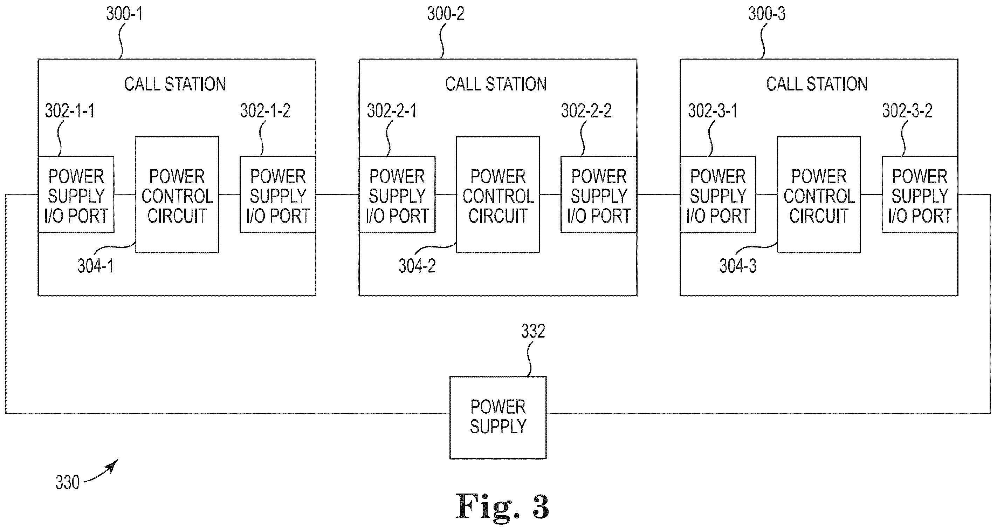

As shown in Figure 1, call station 100 can include a first power supply input/output (I/O) port 102-1 and a second power supply I/O port 102-2. Power supply I/O ports 102-1 and 102-2 can receive power from a power supply of the voice alarm system, as will be further described herein (e.g., in connection with Figure 3). That is, the power supply can provide power to call station 100 via power supply I/O ports 102-1 and 102-2.

As shown in Figure 1, call station 100 can include power control circuit 104 connected to power supply I/O ports 102-1 and 102-2. Power control circuit 104 can control the power that is being supplied to call station 100 via power supply I/O ports 102-1 and 102-2.

For example, power control circuit 104 can delay power from being supplied to call station 100 via power supply I/O ports 102-1 and 102-2 to provide time to determine whether a short (e.g., open) circuit is occurring on either power supply I/O port 102-1 or power supply I/O port 102-2. For instance, power control circuit 104 can delay the power 106 from being supplied to the call station during a powering on of call station 100.

For example, power control circuit 104 can include a first delay circuit 108-1 connected to power supply I/O port 102-2, a second delay circuit 108-2 connected to power supply I/O port 102-1, and a third delay circuit, and a third delay circuit 108-3 connected to both power supply I/O port 102-1 and power supply I/O port 102-2 via diodes 116-3 and 116-4, respectively, as illustrated in Figure 1. Power control circuit 104 can delay power from being supplied to call station 100 via power supply I/O ports 102-1 and 102-2 using delay circuits 108-1, 108-2, and 108-3. For instance, delay circuit 108-1 can delay power from being supplied to call station 100 via power supply I/O port 102-2, delay circuit 108-2 can delay power from being supplied to call station 100 via power supply I/O port 108-1, and delay circuit 108-3 can delay power from being supplied to call station 100 via either of power supply I/O ports 108-1 and 108-2.

Upon a short circuit occurring on one of power supply I/O port 102-1 and 102-2 during the delay, power control circuit 104 can isolate the power supply I/O port 102-1 or 102-2 on which the short circuit is occurring after the delay, and can supply power 106 to call station 100 via the other one of power supply I/O port 102-1 or 102-2 on which the short circuit is not occurring after the delay. That is, the power 106 may be supplied to call station 100 via only the power supply I/O port 102-1 or 102-2 on which the short circuit is not occurring, and not via the power supply I/O port 102-1 or 102-3 on which the short circuit is occurring.

For example, power control circuit 104 can include a first switch 110-1 connected to power supply I/O port 102-1 and a first switch driver 112-1, a second switch 110-2 connected to power supply I/O port 102-2 and a second switch driver 112-2, and a third switch 110-3 connected to a third switch driver 112-3 and to both power supply I/O port 102-1 and power supply I/O port 102-2 via diodes 116-3 and 116-4, respectively, as illustrated in Figure 1. Switch 110-1 can also be connected to power supply I/O port 102-2 via diode 116-1, and switch 110-2 can also be connected to power supply I/O port 102-2 via diode 116-2, as illustrated in Figure 1. Further, switch driver 112-1 can be connected to delay circuit 108-1, switch driver 112-2 can be connected to delay circuit 108-2, and switch driver 112-3 can be connected to delay circuit 108-3, as illustrated in Figure 1. Switches 110-1, 110-2, and 110-3 can be off (e.g., disconnected) prior to call station 100 being powered on, as illustrated in Figure 1, and can remain disconnected during the delay due to delay circuits 108-1, 108-2, and 108-3, respectively.

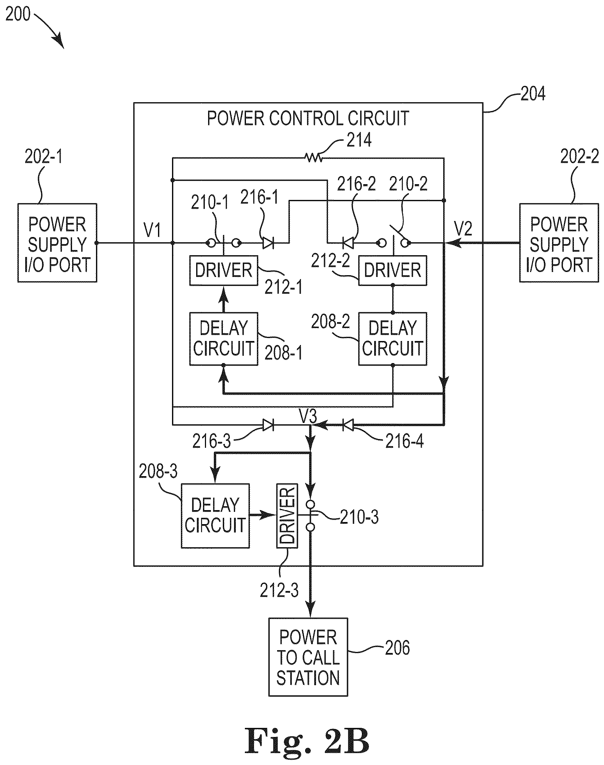

As an example, if the short circuit is occurring on power supply I/O port 102-1, then switch driver 112-1 receives power via power supply I/O port 102-2 after the delay and can turn on (e.g., connect) switch 110-1 after the delay. However, if the short circuit is occurring on power supply I/O port 102-1, then switch driver 112-2 does not receive power via power supply I/O port 102-1 and is prevented from turning on (e.g., connecting) switch 110-2 after the delay. Further, if the short circuit is occurring on power supply I/O port 102-1, then switch driver 112-3 receives power via power supply I/O port 102-2 after the delay and can turn on switch 110-3 after the delay. As such, if the short circuit is occurring on power supply I/O port 102-1, then power supply I/O port 102-1 can be isolated after the delay, and power 106 can be supplied to call station 100 via power supply I/O port 102-2 after the delay. An example illustrating such a scenario in which the short circuit is occurring on power supply I/O port 102-1 will be further described herein (e.g., in connection with Figure 2B).

As an additional example, if the short circuit is occurring on power supply I/O port 102-2, then switch driver 112-2 receives power via power supply I/O port 102-1 after the delay and can turn on (e.g., connect) switch 110-2 after the delay. However, if the short circuit is occurring on power supply I/O port 102-2, then switch driver 112-1 does not receive power via power supply I/O port 102-2 and is prevented from turning on (e.g., connecting) switch 110-1 after the delay. Further, if the short circuit is occurring on power supply I/O port 102-2, then switch driver 112-3 receives power via power supply I/O port 102-1 after the delay and can turn on switch 110-3 after the delay. As such, if the short circuit is occurring on power supply I/O port 102-2, then power supply I/O port 102-2 can be isolated after the delay, and power 106 can be supplied to call station 100 via power supply I/O port 102-1 after the delay. An example illustrating such a scenario in which the short circuit is occurring on power supply I/O port 102-1 will be further described herein (e.g., in connection with Figure 2A).

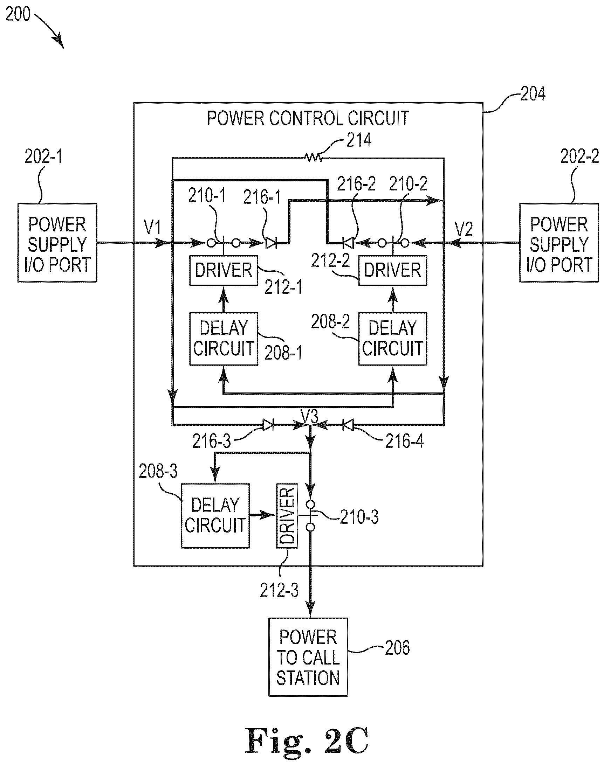

Upon a short circuit not occurring on either power supply I/O port 102-1 or power supply I/O port 102-2 during the delay, neither power supply I/O port 102-1 nor power supply I/O port are isolated, and power control circuit can supply power 106 to call station 100 via both power supply I/O port 102-1 and power supply I/O port 102-2 after the delay. For example, if no short circuit is occurring on either power supply I/O port 102-1 or power supply I/O port 102-2, then switch driver 112-1 receives power via power supply I/O port 102-2 after the delay and can turn on (e.g., connect) switch 110-1 after the delay, switch driver 112-2 receives power via power supply I/O port 102-1 after the delay and can turn on switch 110-2 after the delay, and switch driver 112-3 receives power via both power supply I/O port 102-1 and power supply I/O port 102-2 after the delay and can turn on switch 110-3 after the delay. As such, if no short circuit is occurring on either power supply I/O port 102-1 or power supply I/O port 102-2, then power 106 can be supplied to call station 100 via both power supply I/O port 102-1 and power supply I/O port 102-2 after the delay. An example illustrating such a scenario in which no short circuit is occurring will be further described herein (e.g., in connection with Figure 2C).

As shown in Figure 1, power control circuit 104 can include a resistor 114 connected to power supply I/O port 102-1, power supply I/O port 102-2, switch driver 112-1 (via delay circuit 108-1), and switch driver 112-2 (via delay circuit 108-2). Resistor 114 can provide the ability (e.g., the resistance) to drive switch drivers 112-1 and 112-2 to turn on switches 110-1 and 110-2, respectively, during a powering on of call station 100, while fully withstanding the voltage that may result from the power being supplied via power supply I/O ports 102-1 and/or 102-2. An example of the operation of resistor 114 during a powering on will be further described herein (e.g., in connection with Figure 3).

Figures 2A-2C illustrate examples of an apparatus 200 for power supply and monitoring in a ring network in accordance with an embodiment of the present disclosure. Apparatus 200 illustrated in Figures 2A-2C can be, for example, apparatus (e.g., call station) 100 previously described in connection with Figure 1. For example, apparatus (e.g., call station) 200 can include power supply I/O ports 202-1 and 202-2 analogous to power supply I/O ports 102-1 and 102-2, respectively, previously described in connection with Figure 1. Further, call station 200 can include power control circuit 204 analogous to power control circuit 104 previously described in connection with Figure 1. For instance, power control circuit 204 can include delay circuits 208-1, 208-2, and 208-3 analogous to delay circuits 108-1, 108-2, and 108-3 previously described in connection with Figure 1, switches 210-1, 210-2, and 210-3 analogous to switches 110-1, 110-2, and 110-3 previously described in connection with Figure 1, switch drivers 212-1, 212-2, and 212-3 analogous to switch drivers 112-1, 112-2, and 112-3 previously described in connection with Figure 1, resistor 214 analogous to resistor 114 previously described in connection with Figure 1, and diodes 216-1, 216-2, 216-3, and 216-4 analogous to diodes 116-1, 116-2, 116-3, and 116-4 previously described in connection with Figure 1.

In the example illustrated in Figure 2A, a short circuit is occurring on power supply I/O port 202-2, and accordingly power supply I/O port 202-2 is providing no voltage input. As such, voltage V2 illustrated in Figure 2A is 0 Volts (V), and switch driver 212-1 is prevented from turning on (e.g., connecting) switch 210-1 (e.g., switch 210-1 remains disconnected, as illustrated in Figure 2A). However, power supply I/O port 202-1 is providing a voltage input V1 illustrated in Figure 2A. As such, switch 210-2 is turned on (e.g., connected) by switch driver 212-2, as illustrated in Figure 2A. Switch 210-2 being turned on, however, does not affect V1 due to isolation provided by diode 216-2. Further, switch 210-3 is turned on by switch driver 212-3 and power 206 is provided to call station 200, as illustrated in Figure 2A, with V3 illustrated in Figure 2A being equal to V1 minus the voltage drop of diode 216-3.

In the example illustrated in Figure 2B, a short circuit is occurring on power supply I/O port 202-1, and accordingly power supply I/O port 202-1 is providing no voltage input. As such, voltage V1 illustrated in Figure 2B is 0 V, and switch driver 212-2 is prevented from turning on (e.g., connecting) switch 210-2 (e.g., switch 210-2 remains disconnected, as illustrated in Figure 2B). However, power supply I/O port 202-2 is providing a voltage input V2 illustrated in Figure 2B. As such, switch 210-1 is turned on (e.g., connected) by switch driver 212-1, as illustrated in Figure 2B. Switch 210-1 being turned on, however, does not affect V2 due to isolation provided by diode 216-1. Further, switch 210-3 is turned on by switch driver 212-3 and power 206 is provided to call station 200, as illustrated in Figure 2B, with V3 illustrated in Figure 2B being equal to V2 minus the voltage drop of diode 216-4.

In the example illustrated in Figure 2C, a short circuit is not occurring on either power supply I/O port 202-1 or power supply I/O port 202-2. Accordingly, power supply I/O port 202-1 is providing a voltage input V1 illustrated in Figure 2C, and power supply I/O port 202-2 is providing a voltage input V2 illustrated in Figure 2C. As such, switch 210-2 is turned on (e.g., connected) by switch driver 212-2 and switch 210-1 is turned on by switch driver 212-1, as illustrated in Figure 2C. Further, switch 210-3 is turned on by switch driver 212-3 and power 206 is provided to call station 200, as illustrated in Figure 2C.

Figure 3 illustrates an example of a system 330 in accordance with an embodiment of the present disclosure. In the example shown in Figure 3, system 330 is a voice alarm system that can include a plurality of devices (e.g., call stations 300-1, 300-2, 300-3) connected in a daisy chain configuration. As used herein, a daisy chain configuration can include and/or refer to a configuration in which multiple devices (e.g., multiple call stations) are wired together in a sequence or in a ring network. Although three call stations are included in the example illustrated in Figure 3, embodiments of the present disclosure are not limited to a particular number of call stations that can be connected in the daisy chain configuration.

Each respective call station 300-1, 300-2, and 300-3 can be analogous to call station 100 previously described in connection with Figure 1. For example, as shown in Figure 3, call station 300-1 can include power supply I/O port 302-1-1, power supply I/O port 302-1-2, and power control circuit 304-1, which can be analogous to power supply I/O port 102-1, power supply I/O port 102-2, and power control circuit 104, respectively, previously described in connection with Figure 1. Similarly, call station 300-2 can include power supply I/O port 302-2-1, power supply I/O port 302-2-2, and power control circuit 304-2, which can be analogous to power supply I/O port 102-1, power supply I/O port 102-2, and power control circuit 104, respectively, and call station 300-3 can include power supply I/O port 302-3-1, power supply I/O port 302-3-2, and power control circuit 304-3, which can be analogous to power supply I/O port 102-1, power supply I/O port 102-2, and power control circuit 104, respectively.

At least one power supply I/O port of each respective call station in the daisy chain configuration can be connected to one of the power supply I/O ports of another one of the call stations in the daisy chain configuration. For instance, in the example illustrated in Figure 3, power supply I/O port 302-1-2 of call station 300-1 is connected to power supply I/O port 302-2-1 of call station 300-2, and power supply I/O port 302-2-2 of call station 300-2 is connected to power supply I/O port 302-3-1 of call station 300-3.

As shown in Figure 3, system 330 can include a power supply 332. In some embodiments power supply 332 can be included in a controller of system 330 (not shown for simplicity and so as not to obscure embodiments of the present disclosure).

Power supply 332 can be connected to one of the power supply I/O ports of the first call station in the daisy chain configuration (e.g., the port of the first call station that is not connected to another one of the call stations), and power supply 332 can be connected to one of the power supply I/O ports of the last call station in the daisy chain configuration (e.g., the power of the last call station that is not connected to another one of the call stations). For instance, in the example illustrated in Figure 3, power supply 332 is connected to power supply I/O port 302-1-1 of call station 300-1, and power supply 332 is connected to power supply I/O port 302-3-2 of call station 300-3.

As such, each respective call station in the daisy chain configuration can receive power from power supply 332 via its respective power supply I/O ports. For instance, call station 300-1 can receive power from power supply 332 via power supply I/O ports 302-1-1 and 302-1-2, call station 300-2 can receive power from power supply 332 via power supply I/O ports 302-2-1 and 302-2-2, and call station 300-3 can receive power from power supply 332 via power supply I/O ports 302-3-1 and 302-3-2.

In some examples, the powering on of call station 300-2 can be a two-step process that utilizes the resistor 114 (previously described in connection with Figure 1) of power control circuits 304-1 and 304-3 to turn on the switches (e.g., switches 110-1 and 110-2 previously described in connection with Figure 1) of power control circuits 304-1 and 304-3 in order to provide power to call station 300-2. For instance, in the first step, power supply 332 can provide power to call station 300-1 via power supply I/O port 302-1-1 and can provide power to call station 300-3 via power supply I/O port 302-3-2. The power received by power supply I/O port 302-1-1 can be provided to delay circuit 108-1 of power control circuit 304-1 via resistor 114 of power control circuit 304-1, which can turn on switch 110-1 of power control circuit 304-1, and the power received by power supply I/O port 302-3-2 can be provided to delay circuit 108-2 of power control circuit 304-3 via resistor 114 of power control circuit 304-3, which can turn on switch 110-2 of power control circuit 304-2.

In the second step (e.g., after switch 110-1 of power control circuit 304-1 and switch 110-2 of power control circuit 304-2 have been turned on), power supply 332 can provide power to call station 300-1 via power supply I/O port 302-1-1 and can provide power to call station 300-3 via power supply I/O port 302-3-2. The power received by power supply I/O port 302-1-1 can be provided to power supply I/O port 302-1-2 via switch 110-1 of power control circuit 304-1, and the power received by power supply I/O port 302-3-2 can be provided to power supply I/O port 302-3-1 via switch 110-2 of power control circuit 304-3. Power supply I/O ports 302-2-1 and 302-2-2 can receive the power from power supply I/O ports 302-1-2 and 302-3-1, respectively, to power on call station 300-2.

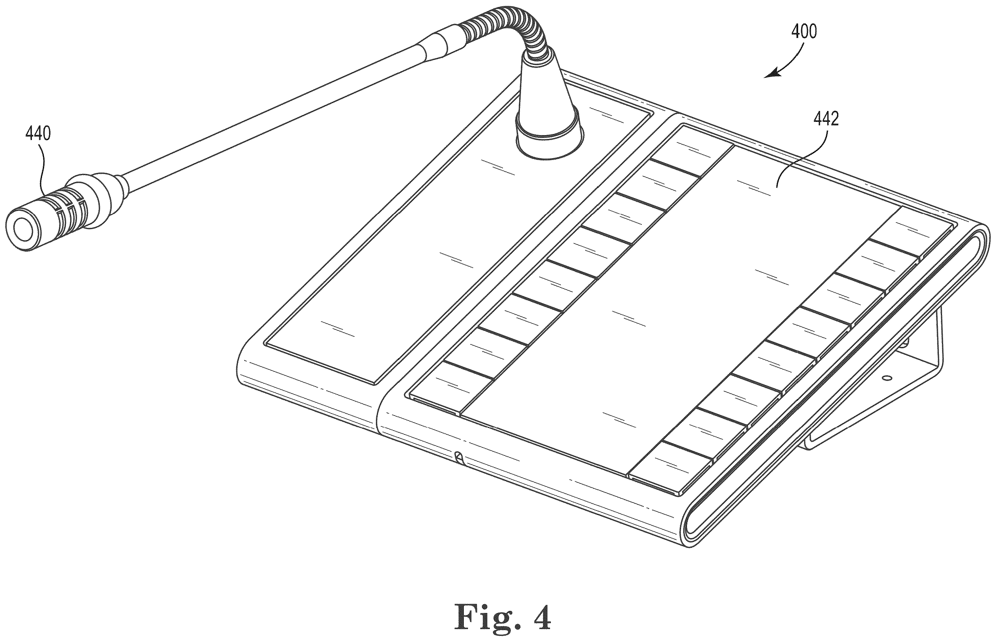

Figure 4 illustrates an example of a call station 400 for a voice alarm system (e.g., a voice alarm system of a facility) in accordance with an embodiment of the present disclosure. Call station 400 can be, for instance, call station 100 previously described in connection with Figure 1. For example, although not shown in Figure 4 for simplicity and so as to not obscure embodiments of the present disclosure, call station 400 can include power supply I/O ports and a power control circuit analogous to power supply I/O ports 102-1 and 102-2 and power control circuit 104, respectively, previously described in connection with Figure 1.

In some examples, call station 400 can be located in a control room or other area of the facility. In some examples, call station 400 can be located remotely from the facility. For instance, call station 400 can be located in a different facility, such as a centralized management facility.

As shown in Figure 4, call station 400 can include a microphone 440 and a user interface 442. A user (e.g. controller, operator, or emergency personnel) can interact with call station 400 via microphone 440 and/or user interface 442. For example, microphone 440 can be any type of microphone capable of receiving audio (e.g. voice) input from the user. Further, user interface 442 can provide (e.g., display and/or present) information to the user, and/or receive information from (e.g., input by) the user. For instance, in some embodiments, user interface 442 can include buttons and/or a graphical user interface (GUI) that can display information to and/or receive inputs (e.g., selections) from the user. The display can be, for instance, a touch-screen (e.g., the GUI can include touch-screen capabilities). Further, the user interface 442 can be localized to any language. For example, the user interface 442 can display information in any language, such as English, Spanish, German, French, Mandarin, Arabic, Japanese, Hindi, etc.

As an example, while an emergency event (e.g., a fire) is occurring in the facility, the user of call station 400 can speak instructions and/or commands for the occupants of the facility, such as, for instance, a warning for the occupants to evacuate, guidance and/or directions for the occupants to follow during the emergency event, etc., into microphone 440. Call station 400 can communicate (e.g., transmit) the instructions and/or commands to the sound emitting devices (e.g., speakers) of the voice alarm system, which in turn can provide (e.g. broadcast) the instructions and/or commands to the occupants of the facility during the emergency event.

Call station 400 can communicate the instructions and/or commands to the sound emitting devices of the voice alarm system via, for instance a wired or wireless network. The network can be a network relationship through which call station 400 can communicate with the sound emitting devices of the voice alarm system. Examples of such a network relationship can include a distributed computing environment (e.g., a cloud computing environment), a wide area network (WAN) such as the Internet, a local area network (LAN), a personal area network (PAN), a campus area network (CAN), or metropolitan area network (MAN), among other types of network relationships. For instance, the network can include a number of servers that receive information from, and transmit information to, call station 400 and the sound emitting devices of the voice alarm system via a wired or wireless network.

As used herein, a "network" can provide a communication system that directly or indirectly links two or more computers and/or peripheral devices and allows users to access resources on other computing devices and exchange messages with other users. A network can allow users to share resources on their own systems with other network users and to access information on centrally located systems or on systems that are located at remote locations. For example, a network can tie a number of computing devices together to form a distributed control network (e.g., cloud).

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. An apparatus (100, 200, 300, 400) for power supply and monitoring in a ring network, comprising:
a first power supply input/output (I/O) port (102-1, 202-1, 302-1);
a second power supply I/O port (102-2, 202-2, 302-2); and
a power control circuit (104, 204, 304) configured to:
delay power from being supplied to the apparatus (100, 200, 300, 400) via the first power supply I/O port (102-1, 202-1, 302-1) and the second power supply I/O port (102-2, 202-2, 302-2); and
upon a short circuit occurring on one of the first power supply I/O port (102-1, 202-1, 302-1) and the second power supply I/O port (102-2, 202-2, 302-2) during the delay:
isolate the one of the first power supply I/O port (102-1, 202-1, 302-1) and the second power supply I/O port (102-2, 202-2, 302-2) on which the short circuit is occurring after the delay; and
supply power to the apparatus (100, 200, 300, 400) via the other one of the first power supply I/O port (102-1, 202-1, 302-1) and the second power supply I/O port (102-2, 202-2, 302-2) on which the short circuit is not occurring after the delay.

2. The apparatus of claim 1, wherein the power control circuit is configured to delay the power from being supplied to the apparatus during a powering on of the apparatus.

3. The apparatus of claim 1, wherein the power control circuit includes:
a first delay circuit (108-1, 208-1) connected to the second power supply I/O port and configured to delay power from being supplied to the apparatus via the second power supply I/O port; and
a second delay circuit (109-2, 208-2) connected to the first power supply I/O port and configured to delay power from being supplied to the apparatus via the first power supply I/O port.

4. The apparatus of any one of claims 1-3, wherein the power control circuit includes:
a first switch (110-1, 210-1) connected to the first power supply I/O port and a first switch driver (112-1, 212-1); and
a second switch (110-2, 210-2) connected to the second power supply I/O port and a second switch driver (112-2, 212-2).

5. The apparatus of claim 4, wherein the first switch driver is configured to:
turn on the first switch after the delay upon the short circuit occurring on the first power supply I/O port; and
not turn on the first switch after the delay upon the short circuit occurring on the second power supply I/O port.

6. The apparatus of claim 4, wherein the second switch driver is configured to:
not turn on the second switch after the delay upon the short circuit occurring on the first power supply I/O port; and
turn on the second switch after the delay upon the short circuit occurring on the second power supply I/O port.

7. The apparatus of claim 4, wherein the power control circuit includes a resistor (114, 214) connected to the first power supply I/O port, the second power supply I/O port, the first switch driver, and the second switch driver.

8. The apparatus of claim 1, wherein the power control circuit includes a delay circuit (108-3, 208-3) connected to the first power supply I/O port and the second power supply I/O port and configured to delay power from being supplied to the apparatus via the first power supply I/O port and the second power supply I/O port.

9. The apparatus of any one of claims 1-3, wherein the power control circuit includes a switch (110-3, 210-3) connected to the first power supply I/O port, the second power supply I/O port, and a switch driver (112-3, 212-3).

10. The apparatus of claim 9, wherein the switch driver is configured to:
turn on the switch after the delay upon the short circuit occurring on the first power supply I/O port; and
turn on the switch after the delay upon the short circuit occurring on the second power supply I/O port.

11. A method for power supply and monitoring in a ring network, comprising:
delaying, during a powering on of an apparatus (100, 200, 300, 400), power from being supplied to the apparatus (100, 200, 300, 400) via a first power supply input/output (I/O) port (102-1, 202-1, 302-1) of the apparatus (100, 200, 300, 400) and a second power supply I/O port (102-2, 202-2, 302-2) of the apparatus (100, 200, 300, 400); and
upon a short circuit occurring on one of the first power supply I/O port (102-1, 202-1, 302-1) and the second power supply I/O port (102-2, 202-2, 302-2) during the delay:
isolating the one of the first power supply I/O port (102-1, 202-1, 302-1) and the second power supply I/O port (102-2, 202-2, 302-2) on which the short circuit is occurring after the delay; and
supplying power to the apparatus (100, 200, 300, 400) via the other one of the first power supply I/O port (102-1, 202-1, 302-1) and the second power supply I/O port (102-2, 202-2, 302-2) on which the short circuit is not occurring after the delay.

12. The method of claim 11, wherein isolating the one of the first power supply I/O port and the second power supply I/O port on which the short circuit is occurring comprises not supplying power to the apparatus via the one of the first power supply I/O port and the second power supply I/O port on which the short circuit is occurring.

13. The method of claim 11, wherein the method includes supplying power to the apparatus via both the first power supply I/O port and the second power supply I/O port after the delay upon a short circuit not occurring on either of the first power supply I/O port and the second power supply I/O port during the delay.

14. The method of any one of claims 11-13, wherein the method includes delaying the power from being supplied to the apparatus using a first delay circuit (108-1, 208-1) connected to the second power supply I/O port, a second delay circuit (108-2, 208-2) connected to the first power supply I/O port, and a third delay circuit (108-3, 208-3) connected to the first power supply I/O port and the second power supply I/O port.

15. The method of any one of claims 11-13, wherein the method includes, upon the short circuit occurring on the first power supply I/O port:
turning on a first switch (110-1, 210-1) connected to the first power supply I/O port after the delay; and
preventing a second switch (110-2, 210-2) connected to the second power supply I/O port from being turned on after the delay.
